# EUROPÄISCHE PATENTSCHRIFT

(11) **EP 1 003 054 B1**
(45) Veröffentlichungstag und Bekanntmachung des Hinweises auf die Patenterteilung: **28.07.2010**
(21) Anmeldenummer: 99122187.0
(22) Anmeldetag: 06.11.1999
(51) Int. Cl.: G02B 6/36

(54) **Vorrichtung und Verfahren zum Anbringen von Lichtleitfasern auf Substraten**
Device and method for mounting optical fibres to substrates
Dispositif et procédé pour monter des fibres optiques sur des substrats

(30) Priorität: 13.11.1998 DE 19852345
(43) Veröffentlichungstag der Anmeldung: 24.05.2000
(73) Patentinhaber: Airbus Operations GmbH, 21129 Hamburg (DE)
(72) Erfinder: Staudigel, Lothar, 89233 Neu-Ulm (DE); Trutzel, Michael, 89134 Blaustein (DE)
(74) Vertreter: Steczek, Stefan

(56) Entgegenhaltungen:
- EP-B- 0 462 710
- EP-B- 0 568 382

## Beschreibung

Die Erfindung bezieht sich auf eine Vorrichtung nach Patentanspruch 1 und auf ein Verfahren zur Applikation von Lichtleitfasern auf Substratoberflächen nach Patentanspruch 12.

Lichtleitfasern, die beispielsweise lokal eingeschriebene Strukturen, wie Bragg-Gitter enthalten, eignen sich als optische Sensoren zur Messung von Druck, Temperatur oder Dehnung. Sie zeichnen sich unter anderem durch ihre EMI-Sicherheit und chemische Robustheit aus, sind kostengünstig herzustellen und lassen sich den jeweiligen Bedürfnissen an die zu erfassenden Meßgrößen anpassen. Derartige Fasersensoren können für Überwachungsaufgaben in vielen Bereichen der industriellen Technik eingesetzt werden. Hierzu werden beispielsweise die Bragg-Gitter Fasersensoren entweder in das Material im Bereich der Prüfregion eingebettet oder auf die Materialoberfläche appliziert.

Bisher sind aus den Schriften US 4,997,253 und US 4,237,474 elektro-optische Module und Herstellungsverfahren bekannt, bei denen Fasern auf einer planaren Substratoberfläche aufgebracht werden. Zum Positionieren der Faser in Bezug auf eine elektronische Komponente, wie beispielsweise eine Diode, wird in US 4,997,253 die Faser auf eine T-förmige Montagehilfe aufgebracht. Eine Applikation der Faser auf die Substratunterlage und die Justage erfolgt dann mit Hilfe eines auf die Montagehilfe einwirkenden Mikromanipulators über einen Lötvorgang. In der Schrift US 4,237,474 werden mehrere quaderförmige Montagehilfen, die über Kleber miteinander verbunden sind verwendet.

Die mechanischen Abmessungen sind für ihre Handhabung und Verarbeitung, insbesondere bei der Fixierung der Sensoren auf einer Oberflächenstruktur problematisch, da die gesamte Länge eines derartigen Sensors einige Meter betragen kann, sein Durchmesser jedoch nur ca. 100-200 µm umfaßt. Dies stellt den Anwender vor erhebliche Handhabungsprobleme, die im Regelfall aufwendige Justageprozeduren erfordern.

Aus der EP0529953 A1 ist eine Vorrichtung bekannt, bei der eine Faser mittels Vakuumbeaufschlagung gehalten und über eine Stempelvorrichtung in einer Nut abgelegt wird.

Der Erfindung liegt die Aufgabe zugrunde, eine Vorrichtung und ein vorteilhaftes Verfahren zur Applikation von Lichtleitfasern auf Substratoberflächen anzugeben.

Diese Aufgabe wird gelöst durch eine Vorrichtung mit den Merkmalen des Patentsanspruchs 1 und durch ein Verfahren mit dem Merkmalen des Patentanspruchs 12.

Die weiteren Ansprüche enthalten vorteilhafte Aus- und Weiterbildungen der Erfindung.

Die Erfindung beinhaltet eine Vorrichtung zur Applikation von Lichtleitfasern auf Substraten, die aus einem Montagejoch, einer Haltevorrichtung und einer Stempelvorrichtung aufgebaut ist.

Die Haltevorrichtung ist aus einem U-förmigen Grundkörper mit nach oben gewölbtem Außenbereich mit Führungsnuten und Haltern zur Montage der Fasern in der Vorrichtung aufgebaut.

Im Bereich der gemeinsamen Auflagefläche der Unterseite der Haltevorrichtung mit dem Substrat verlaufen Führungsnuten, die die Fasern vollständig aufnehmen.

Die im Außenbereich der Haltevorrichtung angebrachten Führungsnuten sind bevorzugt V-förmig ausgebildet, wobei dort zur Fixierung der Faser bevorzugt Magnethalter verwendet werden.

Die Stempelvorrichtung besteht aus einem Stempel, einem Stempelhals und einem Stempelkopf, die sich in der U-förmigen Einsenkung in der Haltevorrichtung befindet und linear in Bezug auf die Haltevorrichtung beweglich angeordnet ist.
Zur linearen Führung ist ein am Stempelkopf befestigter und in einer Bohrung die Haltevorrichtung durchdringenden Führungsstift angebracht, durch den eine Torsion der Stempelvorrichtung bezüglich der Haltevorrichtung unmöglich ist. Eine über den Stempelhals gestülpte Feder ist zwischen Grundkörper und Stempelkopf so positioniert, daß in der Grundeinstellung die Stempelvorrichtung eine Position einnimmt, die bei der Applikation gegenüber der Substratoberfläche etwas zurückgezogen ist und durch eine Arretierung am Stempelhals bestimmt ist.

Der Stempel ist an der Unterseite mit einer Gummiplatte versehen. Diese verhindert eine Beschädigung der Kunststoffummantelung der zu applizierenden Faser. An der Unterseite der Gummiplatte ist zumindest eine Trennfolie aufgezogen, die ein Anhaften der Faser infolge überschüssigen Klebers verhindert.

Die Unterseite des Stempels ist eben ausgebildet oder es ist zwischen Stempel und Gummiplatte im zentralen Bereich eine Einsenkung, bevorzugt im Submillimeterbereich, angebracht. Dadurch werden bei der Applikation lokal unerwünschte Verspannungen im Material verhindert.

Ein Verfahren, zur Applikation von Lichtleitfasern auf einem Substrat besteht aus folgenden Teilschritten:
- verwenden einer erfindungsgemäßen Haltevorrichtung.
- die gereinigte Faser wird in die Vorrichtung eingelegt, ausgerichtet und fixiert,
- die Faser und das Substrat wird auf die vorgesehene Klebelänge mit Kleber bestrichen,
- die Haltevorrichtung wird mit der Stempelvorrichtung mit der fixierten Faser vom Montagejoch genommen und
- die Faser wird durch Druck auf den Stempelkopf auf die Substratoberfläche aufgebracht und verbleibt in der Position bis der Kleber ausgehärtet ist.

Gegebenenfalls wird zwischen Faser und Trennfolie vor der Druckbeaufschlagung über den Stempelkopf eine weitere Trennfolie lose aufgelegt.

Ein besonderer Vorteil der Erfindung besteht darin, daß mit der Vorrichtung ein präzises Positionieren von Fasern und insbesondere von funktionalen Einheiten in Faserabschnitten garantiert ist. Faserbrüche können durch das Applikationsverfahren nahezu ausgeschlossen werden.

Ein weiterer Vorteil ist in der spannungsfreien Applikation in Faserabschnitten mit funktionalen Einheiten, da durch Einsenkungen auf der Stempelunterseite in diesen Bereichen der Anpreßdruck gezielt vermindert werden kann.

Das Abnehmen der Vorrichtung nach dem Aushärten des Klebers wird durch die Trennfolien gewährleistet, so daß keine Krafteinwirkung durch Anhaften überschüssigen Klebers auf die Faser auftritt.

Im folgenden wird die Erfindung anhand von vorteilhaften Ausführungsbeispielen unter Bezugnahme auf schematische Zeichnungen in den Figuren näher erläutert. Es zeigen:
- Fig. 1: Vorrichtung mit Montagejoch, Halte- und Stempelvorrichtung,
- Fig. 2: Faser mit lokaler Struktur als Bragg-Gitter ausgebildet,
- Fig. 3: Unterseite des Stempels,
- Fig. 4: Seitenansicht des Stempels.

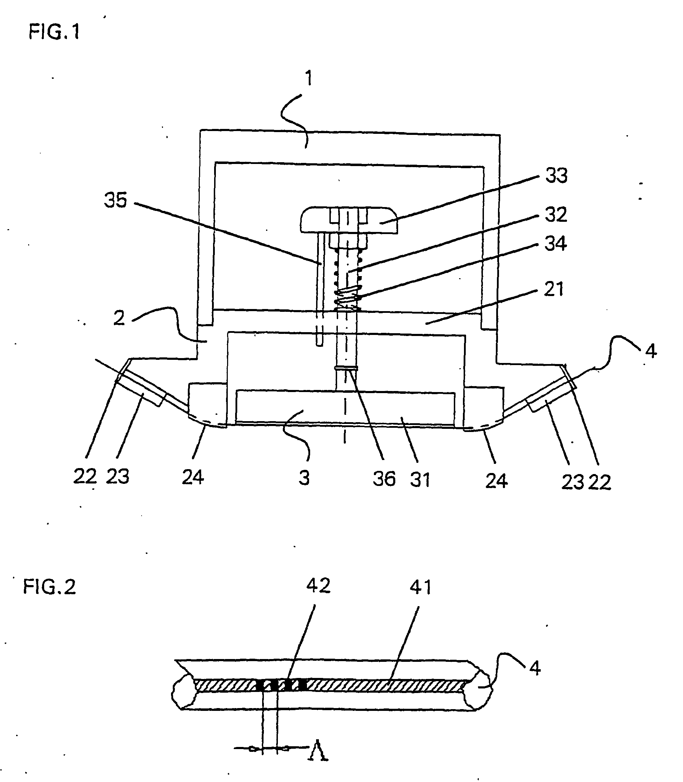

In einem Beispiel gemäß Fig. 1 ist die Vorrichtung zur Applikation von Lichtleitfasern abgebildet. Diese besteht aus dem Montagejoch 1, der Haltevorrichtung 2 und der Stempelvorrichtung 3.

Die Haltevorrichtung 2 ist aus einem U-förmigen Grundkörper 21 mit nach oben gewölbtem Außenbereich mit Führungsnuten 22 und Haltern 23 zur Montage der Faser 4 in der Vorrichtung aufgebaut. Der gewölbte Außenbereich führt die Faser 4 fließend und ohne Knickstellen über die Unterseite der Stempelvorrichtung. Die gemeinsame Auflagefläche der Haltevorrichtung 2 mit dem Substrat befindet sich im Bereich der Nuten 24 auf der Unterseite.

Die Auflagefläche kann, wie in der Figur angegeben, als Einschub aus unterschiedlichen und an die Bedürfnisse des Substrats angepaßte Materialien - beispielsweise aus Teflon - gefertigt sein. Die Führungsnuten 24 nehmen die Fasern vollständig auf. Die erforderliche Tiefe der Führungsnuten bemißt sich aus dem Faserdurchmesser unter der Vorgabe, daß bei der Applikation die Faser 4 nicht durch das darunterliegende Substrat Belastungen ausgesetzt wird.

Die bevorzugt V-förmige Ausbildung der im Außenbereich der Haltevorrichtung angebrachten Führungsnuten 22 bewirken eine präzise Justage der Faser 4. In den Fällen, bei denen die Haltevorrichtung 2 aus Metall gefertigt wird, können unmittelbar im Anschluß an die Führungsnuten 22 zur Fixierung der Fasern 4 Magnethalter 23 verwendet werden, die eine schnelle Montage gewährleisten.

Die Stempelvorrichtung 3 besteht aus einem Stempel 31, der in dem U-förmigen Grundkörper der Haltevorrichtung 2 eingepaßt ist. Der stielförmige Stempelhals 32 ist in einer Bohrung oder einem Gleitlager durch die Haltevorrichtung 2 geführt. Am oberseitigen Ende des Stempelhalses 32 ist zur manuellen Betätigung ein Stempelkopf 33 angebracht, über den beim Applizieren der Druck auf die zu verklebende Faser 4 ausgeübt wird. Statt manueller Betätigung kann auch eine elektro-mechanische oder pneumatische Andruckhilfe eingesetzt werden. Um eine lineare Führung der Stempelvorrichtung 3 zu gewährleisten, ist ein am Stempelkopf 33 befestigter und in einer Bohrung die Haltevorrichtung 2 durchdringender Führungsstift 35 angebracht, der eine Torsion der Stempelvorrichtung bezüglich der Haltevorrichtung 2 unmöglich macht.

Eine über den Stempelhals 32 gestülpte Feder 34 ist zwischen Grundkörper und Stempelkopf 33 positioniert, die in der Grundeinstellung die Stempelvorrichtung 3 in einer durch eine Arretierung 36 am Stempelhals 32 bestimmten oberen Position hält. Die obere Position bestimmt sich aus der Vorgabe, daß beim Applizieren die mit Kleber bestrichene Faser 4 bei der Justage und dem Positionieren das Substrat noch nicht berührt und das Verkleben erst mittels des Krafteinwirkung auf den Stempelkopf 33 bewirkt wird.

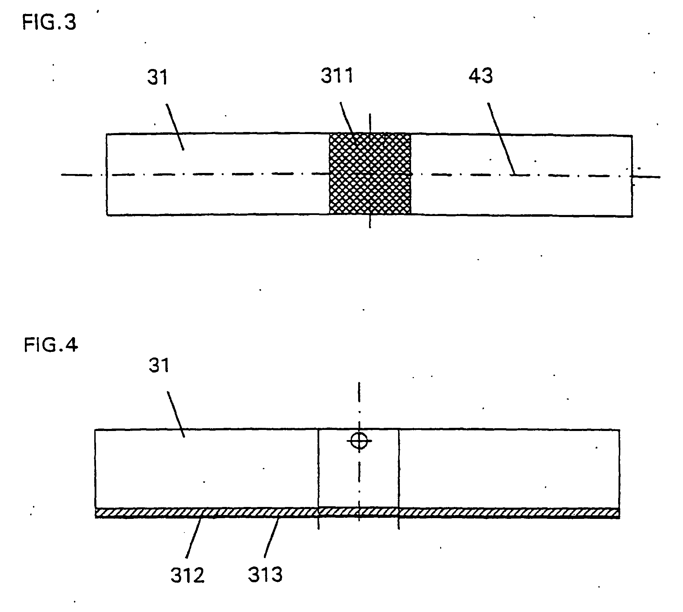

Gemäß Fig. 4 ist der Stempel 31 an der Unterseite zur gleichmäßigen Druckverteilung und zur Verhinderung von Druckbeschädigungen der Kunststoffummantelung bei der Applikation der Faser 4 auf einem Substrat mit einer Gummiplatte 312 versehen. Über die Unterseite der Gummiplatte 312 ist zumindest eine Trennfolie 313 aufgezogen, die ein Anhaften der Faser 4 infolge überschüssigen Klebers verhindert.

Die Unterseite des Stempels 31 ist eben ausgebildet oder es ist zwischen Stempel und Gummiplatte im zentralen Bereich 311, wie aus Fig. 3 zu entnehmen ist, eine Einsenkung, bevorzugt im Submillimeterbereich angebracht. Dadurch werden bei der Applikation lokal unerwünschte Verspannungen im Material verhindert. Gemäß Fig. 2 ist besonders bei lokal in die Faser 4 im Faserkern 41 eingebrachte Strukturen, wie beispielsweise Bragg-Gitter 42, ein spannungsfreies Verkleben erwünscht. Dabei wird auf die lokale Struktur, die genau in der Einsenkung positioniert ist, bei der Applikation lediglich ein ganz geringer Druck ausgeübt. Die Stärke ergibt sich dabei aus der Einsenkungstiefe im zentralen Bereich 311.

Das Verfahren, zur Applikation von Lichtleitfasern auf einem Substrat besteht aus mehreren Teilschritten. In einem ersten Schritt wird die Haltevorrichtung 2 mit der Stempelvorrichtung 3 in einer mit der Stempelunterseite nach oben ragenden Position paßgenau auf das Montagejoch 1 aufgesteckt. Das Montagejoch 1 ist dabei fest, beispielsweise auf einem Labortisch, montiert. Die zur Applikation vorgesehene, gereinigte Faser 4 wird in die Vorrichtung entlang der Achse 43 (Fig. 3) eingelegt. Die Ausrichtung erfolgt über die V-förmigen Führungsnuten 22 und über die Führungsnuten 24. Eine Fixierung in der Halterung bewerkstelligen bei einer metallischen Ausführung die Magnethalter 23. In diesem Zusand befindet sich bereits eine Trennfolie 313 auf der Unterseite des Stempel 31. Gegebenenfalls wird zwischen Faser 4 und Trennfolie 313 vor der Druckbeaufschlagung über den Stempelkopf eine weitere Trennfolie lose aufgelegt.

In einem weiteren Prozeßschritt wird die Faser 4 und das Substrat auf die vorgesehene Klebelänge mit Kleber versehen. Die benötigte Klebermenge bestimmt sich im wesentlichen aus dem Faserquerschnitt. Überschüssiger Kleber wird nach der Applikation mit der Trennfolie 313 teilweise abgezogen. Die Haltevorrichtung 2 wird mit der Stempelvorrichtung 3 mit der fixierten Faser 4 vom Montagejoch 1 genommen. Die Faser wird durch Druck auf den Stempelkopf 33 auf der Substratoberfläche aufgebracht und verbleibt - eventuell durch eine weitere Arretierung, wie beispielsweise eine Klemmschraube, unterstützt - in der Position bis der Kleber ausgehärtet ist. Das Abnehmen der Vorrichtung nach dem Aushärten des Klebers wird durch die Trennfolien gewährleistet, so daß keine Krafteinwirkung durch Anhaften überschüssigen Klebers auf die Faser auftritt.

Mit der Vorrichtung ist ein präzises Positionieren von Fasern und insbesondere von funktionalen Einheiten in Faserabschnitten garantiert. Faserbrüche können durch das Applikationsverfahren nahezu ausgeschlossen werden. Eine spannungsfreie Applikation in Faserabschnitten mit funktionalen Einheiten 42 gemäß Fig. 2 wird durch die Einsenkung auf der Stempelunterseite erzielt, wodurch in diesen Bereichen der Anpreßdruck gezielt vermindert wird.

## Patentansprüche

1. Vorrichtung zur Applikation von Lichtleitfasern auf Substraten mit einer Stempelvorrichtung (3) zum Aufbringen der Faser (4) auf der Substratoberfläche und mit einer die Stempelvorrichtung (3) führende Haltevorrichtung (2), wobei beidseits der Stempelvorrichtung (3) Halter (23) an der Haltevorrichtung (2) zur Fixierung der Faser (4) angeordnet sind, und wobei beidseits der Stempelvorrichtung (3) Nuten (24), die die Faser (4) vollständig aufnehmen, so in der Haltevorrichtung (2) angeordnet sind, dass die Faser (4) über die Unterseite der Stempelvorrichtung (3) geführt wird.

2. Vorrichtung nach Anspruch 1, **dadurch gekennzeichnet, dass** im Außenbereich der Haltevorrichtung (2) Führungsnuten (22) zur Montage der Faser (4) angeordnet sind.

3. Vorrichtung nach Anspruch 2, **dadurch gekennzeichnet, dass** die außenliegenden Führungsnuten (22) V-förmig ausgebildet sind und damit die Ausrichtung der Faser (4) entlang einer vorgegebenen Richtung gewährleisten.

4. Vorrichtung nach Anspruch 1 oder 2, **dadurch gekennzeichnet, dass** die Stempelvorrichtung (3) aus einem Stempel (31), einem Stempelhals (32) und einem Stempelkopf (33) aufgebaut ist.

5. Vorrichtung nach Anspruch 4, **dadurch gekennzeichnet, dass** die Stempelvorrichtung (3) in einer U-förmigen Einsenkung in der Haltevorrichtung (2) linear geführt ist.

6. Vorrichtung nach Anspruch 5, **dadurch gekennzeichnet, dass** durch einen am Stempelkopf (33) befestigten und in einer Bohrung die Haltevorrichtung (2) durchdringenden Führungsstift (35) eine Torsion der Stempelvorrichtung (3) bezüglich der Haltevorrichtung (2) unmöglich ist.

7. Vorrichtung nach Anspruch 5, **dadurch gekennzeichnet, dass**
über den Stempelhals (32) eine Feder (34) zwischen Grundkörper (21) und Stempelkopf (33) gestülpt ist, die in der Grundeinstellung die Stempelvorrichtung (3) in einer durch eine Arretierung (36) bestimmten oberen Position hält.

8. Vorrichtung nach Anspruch 4, **dadurch gekennzeichnet, dass** der Stempel (31) an der Unterseite bei der Applikation einer Faser (4) auf einem Substrat mit einer Gummiplatte (312) versehen ist.

9. Vorrichtung nach Anspruch 8, **dadurch gekennzeichnet, dass** an der Unterseite der Gummiplatte (312) zumindest eine Trennfolie (313) aufgezogen ist, die ein Anhaften der Faser (4) verhindert.

10. Vorrichtung nach Anspruch 8, **dadurch gekennzeichnet, dass** die Unterseite des Stempels (31) eben ausgebildet ist oder zwischen Stempel (31) und Gummiplatte (312) im zentralen Bereich eine Einsenkung (311), bevorzugt im Submillimeterbereich, angebracht ist.

11. Vorrichtung nach einem der vorhergehenden Ansprüche, **gekennzeichnet durch** ein Montagejoch (1) zur Aufnahme der Haltevorrichtung (2) beim Einlegen der Faser (4) in die Führungsnuten (22, 24).

12. Verfahren zur Applikation von Lichtleitfasern auf einem Substrat,**dadurch gekennzeichnet, dass**
- eine Haltevorrichtung (2) nach einem der vorhergehenden Ansprüche verwendet wird,
- die gereinigte Faser (4) in die Haltevorrichtung (2) eingelegt, ausgerichtet und fixiert wird,
- die Faser (4) und das Substrat auf die vorgesehene Klebelänge mit Kleber bestrichen wird,
- die Faser (4) auf die Substratoberfläche durch Druck auf die Stempelvorrichtung 3 aufgebracht wird und in der Position verbleibt bis der Kleber ausgehärtet ist.

13. Verfahren nach Anspruch 12, wobei die Haltevorrichtung (2) mit der Stempelvorrichtung (3) in einer mit der Stempelunterseite nach oben ragenden Position auf einem Montagejoch (1) aufgesteckt wird.

14. Verfahren nach Anspruch 12 oder 13, **dadurch gekennzeichnet, dass** zwischen Faser (4) und einer Trennfolie (313) auf der Stempelunterseite vor der Druckbeaufschlagung eine weitere Trennfolie lose aufgelegt wird.

## Claims

1. A device for applying optical fibres to substrates, comprising a stamping device (3) for applying the fibre (4) to the substrate surface and comprising a holding device (2) which guides the stamping device (3), wherein, on both sides of the stamping device (3), holders (23) are arranged on the holding device (2) for fixing the fibre (4), and wherein, on both sides of the stamping device (3), grooves (24) which completely accommodate the fibre (4) are so arranged in the holding device (2) that the fibre is guided over the underside of the stamping device (3).

2. A device according to claim 1, **characterised in that** guide grooves (22) for mounting of the fibre (4) are arranged in the outer region of the holding device (2).

3. A device according to claim 2, **characterised in that** the outside guide grooves (22) are V-shaped and thus ensure the alignment of the fibre (4) in a predefined direction.

4. A device according to claim 1 or 2, **characterised in that** the stamping device (3) is composed of a stamp (31), a stamp neck (32) and a stamp head (33).

5. A device according to claim 4, **characterised in that** the stamping device (3) is linearly guided in a U-shaped depression in the holding device (2).

6. A device according to claim 5, **characterised in that**, by virtue of a guide pin (35) which is attached to the stamp head (33) and passes through the holding device (2) in a bore, twisting of the stamping device (3) relative to the holding device (2) is impossible.

7. A device according to claim 5, **characterised in that** a spring (34) is disposed over the stamp neck (32) between base body (21) and stamp head (33), which spring (34) in the normal setting holds the stamping device (3) in an upper position defined by a detent (36).

8. A device according to claim 4, **characterised in that** the stamp (31) is provided with a rubber plate (312) on the underside when a fibre (4) is being applied to a substrate.

9. A device according to claim 8, **characterised in that** the underside of the rubber plate (312) is lined with at least one release film (313) which prevents the fibre (4) from adhering.

10. A device according to claim 8, **characterised in that** the underside of the stamp (31) is flat or a depression (311), preferably in the sub-millimetre range, is provided in the central region between stamp (31) and rubber plate (312).

11. A device according to any one of the preceding claims, **characterised by** a mounting yoke (1) for receiving the holding device (2) when the fibre (4) is being inserted into the guide grooves (22, 24).

12. A method for applying optical fibres to a substrate, **characterised in that**
- a holding device (2) according to any one of the preceding claims is used,
- the cleaned fibre (4) is inserted into the holding device (2), aligned and fixed,
- the fibre (4) and the substrate are coated with adhesive over the envisaged adhesion length,
- the fibre (4) is applied to the substrate surface by pressure on the stamping device (3) and remains in the position until the adhesive has cured.

13. A method according to claim 12, wherein the holding device (2) together with the stamping device (3) is placed on a mounting yoke (1) in a position with the underside of the stamp projecting upward.

14. A method according to claim 12 or 13, **characterised in that** a further release film is placed loosely between fibre (4) and a release film (313) on the underside of the stamp before pressure is applied.

## Revendications

1. Dispositif pour l'application de fibres conductrices de lumière sur des substrats doté d'un dispositif de poinçonnage (3) pour l'application de la fibre (4) sur la surface du substrat et d'un dispositif de retenue (2) guidant le dispositif de poinçonnage (3), des supports (23) étant disposés des deux côtés du dispositif de poinçonnage (3) sur le dispositif de retenue (2) pour la fixation de la fibre (4), et des rainures (24), qui reçoivent complètement la fibre (4), étant disposées des deux côtés du dispositif de poinçonnage (3) dans le dispositif de retenue (2) de telle sorte que la fibre (4) est guidée par le côté inférieur du dispositif de poinçonnage (3).

2. Dispositif selon la revendication 1, **caractérisé en ce que** des rainures de guidage (22) pour le montage de la fibre (4) sont disposées dans la zone extérieure du dispositif de retenue (2).

3. Dispositif selon la revendication 2, **caractérisé en ce que** les rainures de guidage (22) extérieures sont conçues en forme de V et garantissent ainsi l'orientation de la fibre (4) le long d'une direction prédéfinie.

4. Dispositif selon la revendication 1 ou 2, **caractérisé en ce que** le dispositif de poinçonnage (3) est constitué d'un poinçon (31), d'un col de poinçon (32) et d'une tête de poinçon (33).

5. Dispositif selon la revendication 4, **caractérisé en ce que** le dispositif de poinçonnage (3) est guidé linéairement dans un enfoncement en U dans le dispositif de retenue (2).

6. Dispositif selon la revendication 5, **caractérisé en ce qu'**une torsion du dispositif de poinçonnage (3) par rapport au dispositif de retenue (2) est rendue impossible du fait de la présence d'une broche de guidage (35) fixée sur la tête de poinçon (33) et traversant le dispositif de retenue (2) dans un perçage.

7. Dispositif selon la revendication 5, **caractérisé en ce qu'**un ressort (34) entre le corps de base (21) et la tête de poinçon (33) est retourné par-dessus le col de poinçon (32), lequel ressort maintient dans le réglage de base le dispositif de poinçonnage (3) dans une position supérieure définie par un dispositif d'arrêt (36).

8. Dispositif selon la revendication 4, **caractérisé en ce que** le poinçon (31) est doté sur le côté inférieur, lors de l'application d'une fibre (4) sur un substrat, d'une plaque de caoutchouc (312).

9. Dispositif selon la revendication 8, **caractérisé en ce qu'**au moins un film de séparation (313) qui empêche une adhérence de la fibre (4), est tiré sur le côté inférieur de la plaque de caoutchouc (312).

10. Dispositif selon la revendication 8, **caractérisé en ce que** le côté inférieur du poinçon (31) est conçu plan ou bien un enfoncement (311), de préférence de l'ordre du sous-millimètre, est placé entre le poinçon (31) et la plaque de caoutchouc (312) dans la zone centrale.

11. Dispositif selon l'une quelconque des revendications précédentes, **caractérisé par** une entretoise de montage (1) pour le logement du dispositif de retenue (2) lors de l'insertion de la fibre (4) dans les rainures de guidage (22, 24).

12. Procédé pour appliquer des fibres conductrices de lumière sur un substrat, **caractérisé en ce que**
- un dispositif de retenue (2) selon l'une quelconque des revendications précédentes est utilisé,
- la fibre (4) nettoyée est introduite dans le dispositif de retenue (2), orientée et fixée,
- la fibre (4) et le substrat sont enduits de colle sur la longueur de collage prévue,
- la fibre (4) est appliquée sur la surface de substrat en exerçant de la pression sur le dispositif de poinçonnage (3) et reste dans la position jusqu'à ce que la colle soit durcie.

13. Procédé selon la revendication 12, le dispositif de retenue (2) étant emboîté avec le dispositif de poinçonnage (3) dans une position dépassant avec le côté inférieur du poinçon vers le haut sur une entretoise de montage (1).

14. Procédé selon la revendication 12 ou 13, **caractérisé en ce qu'**un autre film de séparation est posé de façon mobile entre la fibre (4) et un film de séparation (313) sur le côté inférieur du poinçon avant l'alimentation en pression.
